# EUROPEAN PATENT APPLICATION

(11) **EP 4 844 622 A1**
(43) Date of publication of application: **25.11.2026**
(21) Application number: 26179422.6
(22) Date of filing: 19.05.2026
(51) Int. Cl.: G06F 30/17, G06F 30/27, G06F 113/24

(54) **METHOD FOR MANUFACTURING A SHEET METAL FORMING TOOL**

(30) Priority: 20.05.2025 CH 541202025
(71) Applicant: AutoForm Engineering GmbH, 8808 Pfäffikon SZ (CH)
(72) Inventor: HERRMANN, Lukas, 8808 Pfäffikon (CH); KUBLI, Waldemar, 8808 Pfäffikon (CH); PIETSCH, Matthias, 8088 Pfäffikon (CH)
(74) Representative: Frei Patent Attorneys

(57) **Abstract**

A method for manufacturing a sheet metal forming tool (10) comprises a design step for generating blend faces (8) of the tool (10), a shape of the tool (10) being defined by functional faces (6) and blend faces (8). The design step comprises retrieving a base surface model (3) of the functional faces (6) but not comprising the blend faces (8), and generating therefrom, with a trained machine learning model (5), a model output (52) and an extended surface model (4) in which the blend faces (8) are filled in or reconstructed, as part of a surface patch-based model. A subsequent manufacturing step comprising manufacturing the tool (10) to have a tool shape corresponding to the extended surface model (4), including the shape of the at least one blend face (8).

## Description

The invention relates to the field of sheet metal forming. It relates to a method for manufacturing a sheet metal forming tool.

When designing and manufacturing sheet metal parts by forming processes, such as deep drawing, the shape of certain faces - functional faces - of a part are defined by the target shape of the part and the manufacturing process. For other faces - blend faces - a designer is relatively free to design their shape, but must take care that the functional faces are not negatively affected. While **functional faces** are the key surfaces that define and control the forming process, **blend faces** are the transitional areas that ensure smooth material flow and process stability.

**Functional faces** can be further divided into two subcategories, each with a distinct role in the forming process:
- **Product-Defining Functional Faces**: These surfaces directly shape the final part geometry by forming the final sheet metal component and determining its dimensions and surface quality. Examples are: die faces in the punch and die that establish the part shape.
- **Process-Control Functional Faces:** These surfaces do not directly shape the final product but control material flow and strain distribution during forming. They are critical for maintaining a stable forming process and preventing defects such as wrinkling, cracking, or excessive thinning. Examples are: Bars and gainers in the addendum areas, which guide stretching and material flow. Draw beads, which regulate and restrain material flow to control deformation.

**Blend faces** are transitional surfaces between functional faces, ensuring smooth material flow and gradual force application to prevent defects. Types of Blend Transitions and corresponding faces are:
- **Within** product defining functional faces. Example: Holes in the part shape.
- **Between** product-defining functional faces and process-control functional faces
- **Between** different process-control functional faces. Example: Transitions between different sections of the binder surface to ensure gradual material deformation.

It is a possible object of the invention to create a method of the type mentioned initially, which, given the functional faces defining the shape a tool, allows to automate the process of generating blend faces that join the functional faces. A further possible object is to improve a quality of such blend faces, compared to manually generated blend faces.

These objects are achieved by manufacturing a sheet metal forming tool according to the corresponding independent claims.

The method is for manufacturing a sheet metal forming tool, the forming tool being designed for forming a sheet metal part. The method comprises a design step and a manufacturing step. The design step performs a computer-implemented method for generating blend faces of the tool,
- a shape of the tool being defined by functional faces and blend faces, and
- a shape of the functional faces being input to the design step and a shape of the blend faces being determined by the design step.

The design step comprises the sub-steps of, for at least one blend face of the blend faces:
- retrieving a base surface model comprising a computer-based representation of the shape of the functional faces;
- generating, from the base surface model, a model input for a trained machine learning model;
- applying the trained machine learning model to the model input, generating a model output;
- generating, from the model output, an extended surface model comprising a computer-based representation of the shape of the blend face, combined with the shape of the functional faces;
wherein the extended surface model represents the blend face by a design model controlled by a set of parameters, *in particular* wherein the design model is a surface patch-based model.

The manufacturing step comprises manufacturing the tool to have a tool shape corresponding to the extended surface model, including the shape of the at least one blend face.

In other words, the tool shape is determined by extended surface model. Since the extended surface model is determined by the machine learning model, it can be made to be consistently of better quality and for a larger variety of shapes than designs created by human users.

The generated surfaces in the extended surface model reflect the same constructive principles (smoothness, continuity etc.) and geometric boundary conditions applicable to the functional faces of the part or tool surface, from which the synthetic data is generated, are also valid for the blend faces.

The invention enables a fully associative geometry generation process for blend surfaces, allowing automatic updates without manual intervention whenever the underlying part surfaces or the functional surfaces change. This reduces engineering effort, eliminates manual updating errors, and ensures consistent and accurate geometry throughout iterative design processes.

In embodiments, generating, from the base surface model, the model input comprises setting the model input equal to the base surface model. This means that the machine learning model is able to process the base surface model without a preprocessing step.

In embodiments, generating, from the model output, the extended surface model comprises setting the extended surface model to the model output. This means that the machine learning model is trained to generate the extended surface model without a postprocessing step.

In embodiments, it is the case that
- the functional faces correspond at least one of product-defining functional faces and process-control functional faces of the tool; and
- the blend faces correspond to
   ∘ transition regions between product-defining functional faces and process-control functional faces,
   ∘ transition regions within product-defining functional faces,
   ∘ transition regions within process-control functional faces, or
   ∘ transition regions between different process-control functional faces.

For example, blend faces can correspond to a hole, an addendum region, a section of a binder surface, etc ...

In embodiments, the model **input** comprises a model of a **boundary region** of one or more functional faces adjacent to the blend face.

In embodiments, the model **input** comprises a model of a **boundary line** of one or more functional faces adjacent to the blend face, the model of the boundary line comprising a 3D trajectory of the line and a **surface normal** and a **curvature value** of the functional face on the boundary line.

In embodiments, the model input does *not* comprise an initial estimate of the blend face.

In embodiments, the model **input** comprises an initial estimate of the blend face.

In embodiments, the model **input,** in particular the model of the boundary region and the initial estimate, is a **discretized spatial representation,** in particular one of a **mesh model, a point cloud or a height field.**

In embodiments, the initial estimate is represented by a **function-based model.**

In embodiments, the base surface model is a **CAD** model and the model **input** is generated by known methods for **mesh generation.**

A **CAD model** is a computer-based geometric representation of a physical object or surface, wherein the shape is defined by parametric, analytic, or procedural functions, such as curves, surfaces, or solid features. In contrast to mesh-based models, which approximate geometry using discrete polygonal elements (typically triangles), a CAD model represents geometry with continuous mathematical definitions, such as NURBS surfaces, Bézier patches, or algebraic equations, enabling exact evaluation of positions, normals, and curvature. Such models support design intent, dimensional constraints, and associativity, allowing for modification through parameter changes and are typically used in mechanical design, manufacturing, and simulation workflows. CAD models often are surface patch-based models.

A **surface patch-based model** is a geometric representation of a surface or object composed of a connected topology of surface patches, wherein each patch corresponds to a standard bounded geometric primitive, such as planes, cylinders, cones, spheres, tori, or parametric surfaces (e.g., NURBS patches). Each surface patch is defined over a bounded parametric domain and is associated with adjacent patches via shared boundary curves or edges, forming a continuous or piecewise-continuous surface structure.

In other words, in embodiments, the model comprises a **topological graph of surface elements,** wherein each element is a CAD-defined bounded primitive surface, and adjacency relations between elements are explicitly maintained. The geometric and topological data jointly define the surface and its continuity characteristics.

A **discretized spatial representation** is a computer-based model that describes the shape or surface of a physical object by means of **sampled data points in space,** optionally connected or structured according to a predefined topology. These representations approximate geometry using **finite spatial** resolution. Examples include:
- A **mesh model,** which defines surfaces using connected **vertices, edges, and faces** (typically triangles or quadrilaterals) forming a polygonal approximation of the object's surface.
- A **point cloud,** which comprises an **unordered set of 3D points,** typically sampled from the surface of a physical object, for example, by 3D scanning or photogrammetry. Each point contains X, Y, and Z coordinates, but there is no inherent connectivity or order between them.
- A **height field** (or heightmap) is a structured grid where each cell holds a single height value (Z) corresponding to a fixed X and Y location. It defines a surface as a function Z = f(X, Y), which means it can only represent surfaces without vertical structures or overhangs.

In addition to direct geometric sampling, discretized spatial representations may also comprise **fields of derived surface quantities,** such as **major and minor curvature values, surface normals,** or **strain distributions,** which are sampled at discrete surface locations and from which the underlying 3D surface geometry can be inferred or reconstructed.

A **function-based model** is a model where the shape or surface is defined as the zero level set (or a level set in general) of a scalar field function f(x, y, z), also called signed distance function. This function returns a signed distance (or similar metric) from any point in space to the surface. **In the present context,** the trained machine learning model can output values returned by the function, without comprising an analytic version of the function and its parameters.

Care should be taken not to confuse the two terms "functional face" (which describes the role of a face in the sheet metal forming process) and "function-based model" (which describes a specific way for representing a surface in computational geometry).

In embodiments,
- the model output comprises a discretized spatial representation, in particular one of a mesh model, a point cloud, a height field or a curvature field, or
- the model output comprises a function-based model description of the blend faces,
and the step of generating, from the model output, the extended surface model, comprises the step of generating the extended surface model as a surface patch-based model.

In embodiments, the model output comprises a surface patch-based model.

In embodiments, therefore, for example the model input is a discretized spatial representation representing functional faces, and the trained machine learning model is trained to generate, from the model input the model output being a discretized spatial representation comprising the same functional faces combined with at least one blend face that join these functional faces.

In embodiments, a computer-implemented method is provided for generating blend **faces** of a sheet metal forming **tool,**
- a shape of the tool being defined by **functional faces** and **blend faces,**
- a **shape** of the functional faces being input to the method and a **shape** of the blend faces being determined by the method,
the method comprising the steps of, for at least one blend face of the blend faces:
- retrieving a **base surface model** comprising a computer-based representation of the shape of the functional faces;
- generating, from the base surface model, a **model input** for a **trained machine learning model;**
- applying the trained machine learning model to the model input, generating a **model output;**
- generating, from the model output, an **extended surface model** comprising a computer-based representation of the shape of the blend face,
wherein the extended surface model represents the blend face by a design model controlled by a set of parameters, *in particular* wherein the design model is a surface patch-based model.

In embodiments, a computer-implemented method is provided for training a **machine learning model**, the method comprising the steps of:
- receiving a plurality of **training data sets**, each training data set comprising a base surface model and an **associated** extended surface model;
- in each training data set, the base surface model representing a **formed sheet metal surface** or a forming tool surface, with one or more blend regions removed, and the extended surface model representing the same formed sheet metal surface or forming tool surface with the same blend regions filled in;
- with the plurality of training data sets, training the machine learning model to associate a **model input** corresponding to the base surface model with a **model output** corresponding to the extended surface model.

Here, the correspondence is a one to one correspondence.

In embodiments, a computer-implemented method is provided for generating, from a base surface model, an extended surface model with blend faces, the method comprising the steps of: training a machine learning model with the method for **training** as described herein and using the trained machine learning model with the method for **generating blend faces** as described herein.

In embodiments, the method comprises a **training step** preceding the design step, the training step comprising the steps of
- receiving a plurality of **training data sets,** each training data set comprising a base surface model and an **associated** extended surface model;
- in each training data set, the base surface model representing a **formed sheet metal surface** or a forming tool surface, with one or more blend regions removed, and the extended surface model representing the same formed sheet metal surface or forming tool surface with the same blend regions filled in;
- with the plurality of training data sets, training the machine learning model to associate **a model input** corresponding to the base surface model with a **model output** corresponding to the extended surface model.

In embodiments, the method comprises the step of **generating one or more training data sets** by retrieving, for each training data set, a base surface model and an associated extended surface model **from a database.** In particular, the extended surface model has been generated by human users.

In embodiments, the method comprises the step of **generating one or more training data sets** by retrieving, for each training data set, a synthetic model output representing a surface, and creating an associated synthetic model input by choosing regions of the surface, to be called **cutout regions,** and removing the cutout regions from the synthetic model output.

In embodiments, the method comprises the step of generating a plurality of synthetic model inputs by systematically or randomly varying a shape and location of the cutout regions being removed.

The methods for **generating blend faces** and for training a **machine learning model** can be implemented as methods of operating a data-processing system. The invention can also be embodied in one or more of the following forms:
- A data-processing apparatus or system comprising means for carrying out said method. Typically, the data-processing apparatus or system is programmed to carry out said method.
- A computer program, or computer program product, adapted to perform said method. A computer program, typically comprising software code, adapted to perform said method. The computer program typically is loadable into an internal memory of a data processing system or apparatus, and comprises computer-executable instructions to cause one or more processors of the data processing system or apparatus to execute one or more of the design step and the training step.

- The computer program can be carried on an electric carrier signal. In other words, the computer program is embodied as a reproducible computer-readable signal, and thus can be transmitted in the form of such a signal.
- A non-transitory computer-readable storage medium comprising computer readable program code encoding a computer program that, when loaded and executed on a computer, causes the computer to execute one or more of the design step and the training step. The computer readable medium is non-transitory; that is, tangible.

Further embodiments are evident from the dependent patent claims.

The subject matter of the invention will be explained in more detail in the following text with reference to exemplary embodiments which are illustrated in the attached drawings, which schematically show:
- Figure 1: a tool for forming a sheet metal part;
- Figure 2: a base surface model;
- Figure 3: an extended surface model;
- Figure 4: a training workflow;
- Figure 5: a machine learning inference workflow;
- Figure 6: generation of training data;
- Figure 7: a base surface model with an initial estimate of a blend face;
- Figure 8: an extended surface model with a blend face.

In principle, identical or functionally identical parts are provided with the same reference symbols in the figures.

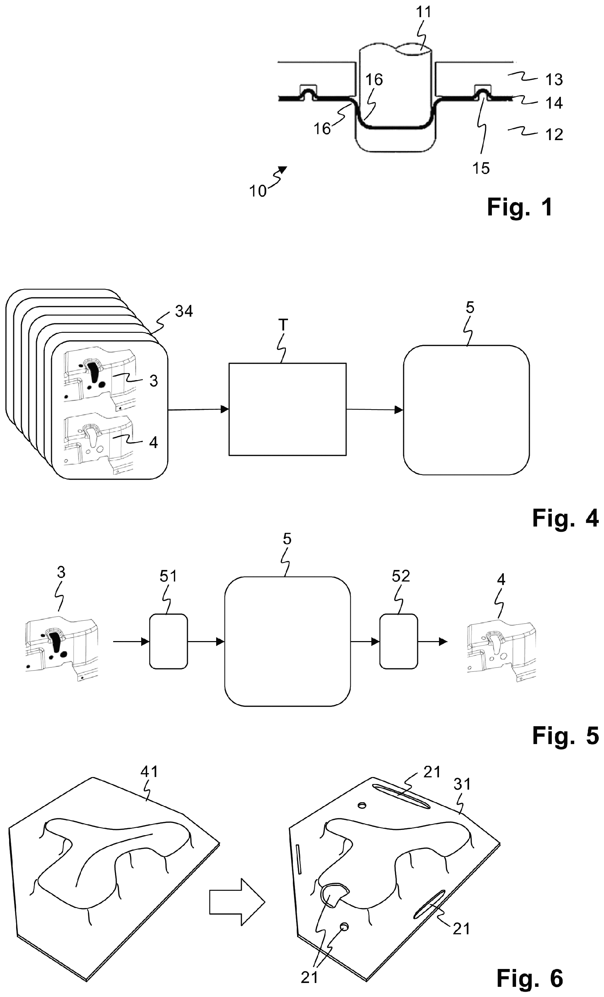

**Figure 1** schematically shows a tool 10 for forming a real part 14, the tool 10 comprising a punch 11 and a die 12. The part 14 is held against the die 12 by means of a blank holder 13. The tool 10 is arranged in a forming press, not shown. During the forming operation, the part 2 is held by the blank holder 13, the punch 11 is moved towards the die 12, or vice versa, and the part 14 is formed according the shape of the tool 10. This involves pulling and stretching the part 14 over radii 16 of the tool 1. In order to control the flow of the part material, drawbeads 15 can be arranged at the periphery of the tool 10, holding back the flow of material. The tool shown corresponds to a deep drawing forming operation. The shape of the part is mainly determined by the shape of the tool 10, but is also determined by effects such as springback, thermal distortion, thickening and thinning of the material by the forming process, etc.. Such effects typically are taken into account and compensated for in the shape of the tool 10.

The real part 14 can be subject to further operations for cutting holes in the part and cutting off surrounding material. In the context of the present document, the part 14 need not be a part in its final assembled state, but can be an intermediate product with a desired target geometry.

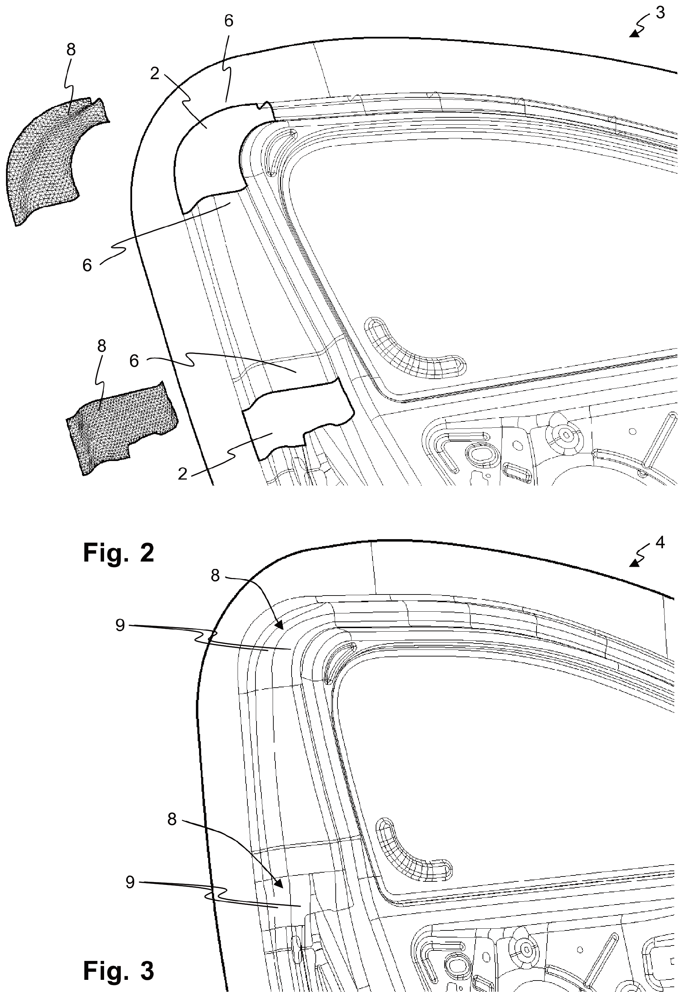

**Figure 2** shows a **base surface model** 3. Such a model is the starting point for the method described herein. The base surface model 3 describes the desired target geometry of the part 14. The example shown includes functional faces 6 defining the desired geometry of the part, and **blend regions** 2 that have no direct function in the part, and whose geometry or shape is therefore not yet defined. In this example the blend regions 2 are transition surfaces between product-defining functional faces and process-control functional faces. Therefore the base surface model 3 must be extended so as to define the shape of the tool corresponding to the region that will later be cut off. For each blend region 2, a corresponding blend face 8 needs to be found, defining the shape of the tool 10 in this region.

The shape of the blend faces 8 needs to be designed so as satisfy requirements that are specific to the sheet metal forming process. For example, the requirements comprise avoiding undue stresses and strains in the adjacent functional faces 6, and to ensure smooth material flow and stability of the forming process.

The design of blend faces 8 traditionally is done manually, with a human part designer shaping them based on experience, with such requirements in mind.

**Figure 2** shows such blend faces 8 in a mesh-based representation. In the figure, for clarity the blend faces 8 are drawn separate from the base surface model 3.

**Figure 3** shows an extended surface model 4. Here, the blend faces 8 are in a representation based on surface patches or blend face primitives 9, and are drawn in place as part of the base surface model 3.

In other embodiments, blend regions 2 are holes, or lie between different process-control functional faces. For example, blend faces 8 can correspond to an addendum. An **addendum** is a region of the part, adjacent to the final, cut-out target shape of the part, that guides and influences the flow of sheet metal during a forming operation. It is not part of the final part geometry but is designed to manage material draw-in, reduce wrinkling, distribute strain, and ensure the desired thickness and shape are achieved in the final component. Whereas a hole 2 is entirely surrounded by product-defining functional faces 6, an addendum is bordered or bounded only along part of its boundary by product-defining functional faces 6

The present method is based on **training a machine learning model** 5 to generate blend faces 8 given information about the shape of the part adjacent to and partially or entirely surrounding blend regions 2. Blend regions 2 can be one of different classes, classes being, for example, holes 2, addendums, transitions between different sections of the addendum and binder surface, etc.

**Figure 4** shows a training workflow. Therein, the machine learning model 5 is trained in a training process executed in a training module T by associating base surface models 3 with corresponding extended surface models 4. A pair of a base surface model 3 and a corresponding extended surface model 4 is called a training data set 34. In each training data set 34, the extended surface model 4 represents the same part or part region as the base surface model 3, but with blend faces 8 added, filling in the missing blend regions 2. Training data sets 34 can be extracted from existing databases of part models where the extended surface models 4 have been generated manually from base surface models 3.

The type of models used for training and subsequently in the inference phase can be one of the model types of the following list:
- mesh model;
- point cloud;
- height field;
- derived surface quantities, in particular major and minor curvature;
- signed distance function;
- a surface patch model.

In embodiments, is the case that the two models of the training data set 34 are of the same type. In other embodiments, they are of a different type.

In embodiments, is the case that training data sets 34 are grouped according to the class of the respective blend faces 8. A separate machine learning model 5 can be trained for each class. In the inference phase, depending on the class of each blend region 2, the appropriate trained machine learning model 5 is used.

In embodiments, the model type used for the model input 51 is a mesh-based model. If the base surface model 3 is of another type, the mesh-based model can be generated by known methods such as, for example:
- Quad-Dominant Surface Meshing,
- Delaunay Triangulation (Surface Mesh),
- Advancing Front Method (AFM) for Surface Meshing,
- Medial Axis-Based Meshing (Shell Meshing).
- PDE-based mesh generation.

**Figure 5** shows a machine learning inference workflow with an inference module implementing the machine learning model 5. Given a base surface model 3, the model is pre-processed in a pre-processing module to generate a model input 51. Pre-processing can comprise one or more of:
- Partitioning the base surface model 3 into **model sections,** each model section comprising one blend region 2, each model section to be processed individually by the machine learning model 5;
- Converting the base surface model 3 or model section into one of the types of the above list of model types;
- Determining, for each blend region 2, a class of the blend region 2, each blend region 2 to be processed by an instance of the machine learning model 5 that is trained for this class;
- Setting the model input 51 equal to the base surface model 3.

The output of the machine learning model 5, called model output 52, is post-processed in a post-processing module to generate the extended surface model 4. Pre-processing can comprise one or more of:
- Re-combining separately processed model sections that comprise the blend faces 8 generated by the machine learning model 5;
- Converting the model output 52 from the type returned by the machine learning model 5 into a type used for the extended surface model 4;
- Setting the extended surface model 4 equal to the model output 52.

In embodiments, the model type used for the extended surface model 4 is a surface patch-based model. If the model output 52 is of another type, the surface patch-based model can be generated by known methods such as, for example:
- Mesh Simplification & Feature Detection
- Surface Reconstruction
- Automatic Feature Recognition
- Boundary Surface Fitting (NURBS Surface Fitting)
- Topology Optimization and Rebuilding
- Parametric Conversion with Data Cleanup

**Figure** 6 shows a generation of synthetic training data that does not rely on manually generated extended surface models. Starting point is a synthetic model output 41 representing a surface. This can be - in principle - an arbitrary surface. In embodiments, it corresponds to the shape of a sheet metal part or a forming tool in general or a sheet metal part or a forming tool in a particular domain, such as automotive manufacturing, or to the shape of just a section of such a sheet metal part. From this synthetic model output 41, a synthetic model input 31 is generated by removing sections 21 of the modelled surface, corresponding to the cutting out of holes in a real part. The shape and location of the sections 21 being removed can be varied randomly. Each removed section corresponds to a blend region 2 in general, or a hole or addendum etc. in particular. In embodiments, the blend region removed for the purpose of generating the synthetic training data set does not necessarily correspond to a blend face between functional faces. In this way, for each removed section 21, a training data set 34 is generated, comprising the synthetic model input 31 and the synthetic model output 41. The surface sections 21 missing from the synthetic model input 31 but present in the synthetic model output 41 are the basis on which the machine learning model 5 learns to generate blend faces 8.

Because the synthetic model input 31 is generated on the basis of the synthetic model output 41, the blend faces 8 present in the synthetic model output 41 have an ideal shape, because they have the original shape of the part or tool.

As a result, after training the machine learning model 5 with the synthetic model input 31 and synthetic model output 41, in the inference phase the model outputs 52 are based on the quasi-ideal shapes of the blend face 8. This results in higher quality blend faces 8 than would be the case when using manually generated, heuristic based training data.

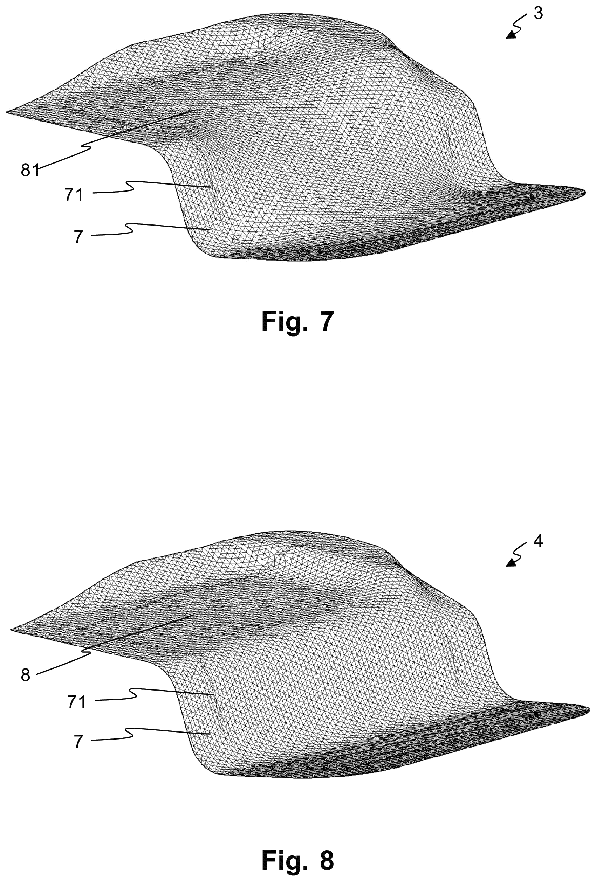

**Figure 7** shows a base surface model 3 with an initial estimate 81 of a blend face. The base surface model 3 comprises a boundary region 7 that is a part of the functional faces 6 that bordering on the blend region 2. The functional faces 6 and the blend region 2 meet at a boundary line 71. In the base surface model 3, the boundary line 71 can be an edge of a hole or an addendum. In embodiments, the entire functional faces 6 are used as model input 51. In other embodiments, only the boundary region 7 is used as model input. The boundary region 7 can be represented by a model of a type from the above list of model types. In other embodiments, only the boundary line 71 is used as model input. The boundary line 71 preferably is used together with the direction of the surface normal along the boundary line 71 and the major and minor curvatures of the surface of the boundary region 7 along the boundary line 71.

In embodiments, the base surface model 3 is input to the machine learning model 5 without the initial estimate 81.

In other embodiments, the initial estimate 81 is generated in the pre-processing step and included in the model input 51. The initial estimate 81 can be generated, for example, as an interpolated surface joining the functional faces 6, typically with constant tangents at the boundary line 71. Methods for generating such interpolated or smoothed surfaces are generally known, and can be made to minimise a given criterion, such as total surface, smallest total energy, etc. The initial estimate can be used

**Figure 8** shows the corresponding extended surface model 4 with a blend face 8. As can be seen, radii that are present at opposite sides of the boundary region 7 have been extended over the blend face 8 to join one another, reducing complexity of the part shape and thereby improving its manufacturability. If the machine learning model 5 uses an initial estimate 81, it can return the shape of the blend face 8 as an offset (in 3D) from the initial estimate 81, e.g. in the form of a vector field of displacement vectors.

The method can continue by manufacturing the real tool 1 corresponding to the design defined by the base surface model 3, and optionally also by subsequently producing the real part. The shape of the tool 10 and the part 14 are determined by the blend faces 8 generated by the machine learning model 5, and incorporates shape information extracted from the training data.

While the invention has been described in present embodiments, it is distinctly understood that the invention is not limited thereto, but may be otherwise variously embodied and practised within the scope of the claims.

## Claims

1. A **method for manufacturing a sheet metal forming tool** (10) for forming a sheet metal part (14), the method comprising a design step and a manufacturing step,
the **design step** performing a computer-implemented method for generating blend faces (8) of the **tool** (10),
• a shape of the tool (10) being defined by **functional faces** (6) and **blend faces** (8),
• a **shape** of the functional faces (6) being input to the design step and a **shape** of the blend faces (8) being determined by the design step,
the design step comprising the sub-steps of, for at least one blend face (8) of the blend faces (8):
• retrieving a **base surface model** (3) comprising a computer-based representation of the shape of the functional faces (6);
• generating, from the base surface model (3), a **model input** (51) for a **trained machine learning model** (5);
• applying the trained machine learning model (5) to the model input (51), generating a **model output** (52);
• generating, from the model output (52), an **extended surface model** (4) comprising a computer-based representation of the shape of the blend face (8), combined with the shape of the functional faces (6);
wherein the extended surface model (4) represents the blend face (8) by a design model controlled by a set of parameters, *in particular* wherein the design model is a surface patch-based model;
the **manufacturing step** comprising manufacturing the tool (10) to have a tool shape corresponding to the extended surface model (4), including the shape of the at least one blend face (8).

2. The method of claim 1, wherein it is the case that
• the functional faces (6) correspond at least one of product-defining functional faces and process-control functional faces of the tool (10); and
• the blend faces (8) correspond to
∘ transition regions between product-defining functional faces and process-control functional faces,
∘ transition regions within product-defining functional faces,
∘ transition regions within process-control functional faces, or
∘ transition regions between different process-control functional faces.

3. The method of one of the preceding claims, wherein the model **input** (51) comprises a model of a **boundary region** (7) of one or more functional faces (6) adjacent to the blend face (8).

4. The method of one of the preceding claims, wherein the model **input** (51) comprises a model of a **boundary line (71)** of one or more functional faces (6) adjacent to the blend face (8), the model of the boundary line comprising a 3D trajectory of the line and a **surface normal** and a **curvature value** of the functional face (6) on the boundary line.

5. The method of one of the preceding claims, wherein the model input (51) does *not* comprise an initial estimate (81) of the blend face (8).

6. The method of one of claims 1 to 4, wherein the model **input** (51) comprises an initial estimate (81) of the blend face (8).

7. The method of one of the preceding claims, wherein one or more of the following is the case:
• the model input (51), in particular the model of the boundary region (7) and/or the initial estimate (81), is a discretized spatial representation, in particular one of a mesh model, a point cloud or a height field;
• the initial estimate (81) is represented by a **function-based model.**

8. The method of one of the preceding claims, wherein
• the model **output** (52) comprises a **discretized spatial representation,** in particular one of a **mesh model, a point cloud, a height field or a curvature field,** or
• wherein the model output (52) comprises a **function-based model** description of the blend faces (8),
and the step of generating, from the model output (52), the extended surface model (4), comprises the step of generating the extended surface model (4) as **a surface patch-based model.**

9. The method of one of claims 1 to 8, wherein the model output (52) comprises a **surface patch-based model.**

10. The method of one of the preceding claims, comprising a **training step** preceding the design step, the training step comprising the steps of
• receiving a plurality of **training data sets** (34), each training data set (34) comprising a base surface model (3) and an **associated** extended surface model (4);
• in each training data set (34), the base surface model (3) representing a **formed sheet metal or forming tool surface** (1) with one or more blend regions (2) removed, and the extended surface model (4) representing the same formed sheet metal or forming tool surface (1) with the same blend regions (2) filled in;
• with the plurality of training data sets (34), training the machine learning model (5) to associate **a model input** (51) corresponding to the base surface model (3) with a **model output** (52) corresponding to the extended surface model (4).

11. The method of claim 10, comprising the step of **generating one or more training data sets** (34) by retrieving, for each training data set (34), a base surface model (3) and an associated extended surface model (4) **from a database,**
*in particular* wherein the extended surface model (4) has been generated by human users.

12. The method of claim 10, comprising the step of **generating one or more training data sets** (34) by retrieving, for each training data set (34), a synthetic model output (41) representing a surface, and creating an associated synthetic model input (31) by choosing regions of the surface, to be called cutout regions, and removing the cutout regions from the synthetic model output (41).

13. The method of claim 12, comprising the step of generating a plurality of synthetic model inputs (31) by systematically or randomly varying a shape and location of the cutout regions being removed.

14. A **computer program** loadable into an internal memory of a computer, comprising computer program code means to make, when said computer program is loaded in the computer, the computer execute the design step defined in claim 1.

15. A non-transitory computer-readable storage medium comprising computer readable program code encoding a computer program that, when loaded and executed on a computer, causes the computer to execute the design step defined in claim 1.
